(19) Europäisches Patentamt
European Patent Office
Office européen des brevets

(11) **EP 4 621 556 A1**

# (12) EUROPEAN PATENT APPLICATION

(43) Date of publication:
**24.09.2025 Bulletin 2025/39**

(21) Application number: **25164539.6**

(22) Date of filing: **18.03.2025**

(51) International Patent Classification (IPC):
*G06F 8/41* ^(2018.01)     *G06F 8/72* ^(2018.01)
*G06F 21/14* ^(2013.01)     *G06N 3/126* ^(2023.01)

(52) Cooperative Patent Classification (CPC):
**G06F 8/4434; G06F 8/72; G06F 21/14; G06N 3/126**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2024 US 202418611085**

(71) Applicant: **Cylance Inc.
Plano, TX 75024 (US)**

(72) Inventors:
- **COLLADO UMANA, Julian**
  **Waterloo, ON N2K 0A7 (CA)**
- **FIENBERG, Aaron Mark Tresch**
  **Waterloo, ON N2K 0A7 (CA)**
- **GRAVES, Laura Micah**
  **Waterloo, ON N2K 0A7 (CA)**
- **CHEN, Tian**
  **Waterloo, ON N2K 0A7 (CA)**

(74) Representative: **MERH-IP Matias Erny Reichl
Hoffmann
Patentanwälte PartG mbB
Paul-Heyse-Straße 29
80336 München (DE)**

## (54) MODIFIYING SOFTWARE CODE

(57) Systems, methods, and software can be used to modify a software code. In some aspects, a method includes: obtaining a software code; and processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

**EP 4 621 556 A1**

**Description**

**TECHNICAL FIELD**

The present disclosure relates to modifying a software code.

**BACKGROUND**

In some cases, a decompiler can be used to process a binary code to generate an approximate version of the source code. The output of the decompiler may not match the original source code that is used to generate the binary code, but the output of the decompiler may provide a close approximation of original source code.

**DESCRIPTION OF DRAWINGS**

FIG. 1 is a schematic diagram showing an example system that modifies a software code, according to an implementation.
FIG. 2 is a flowchart showing an example method for modifying a software code, according to an implementation.
FIG. 3 illustrates a high-level architecture block diagram of a computer according to an implementation.

Like reference numbers and designations in the various drawings indicate like elements.

**DETAILED DESCRIPTION**

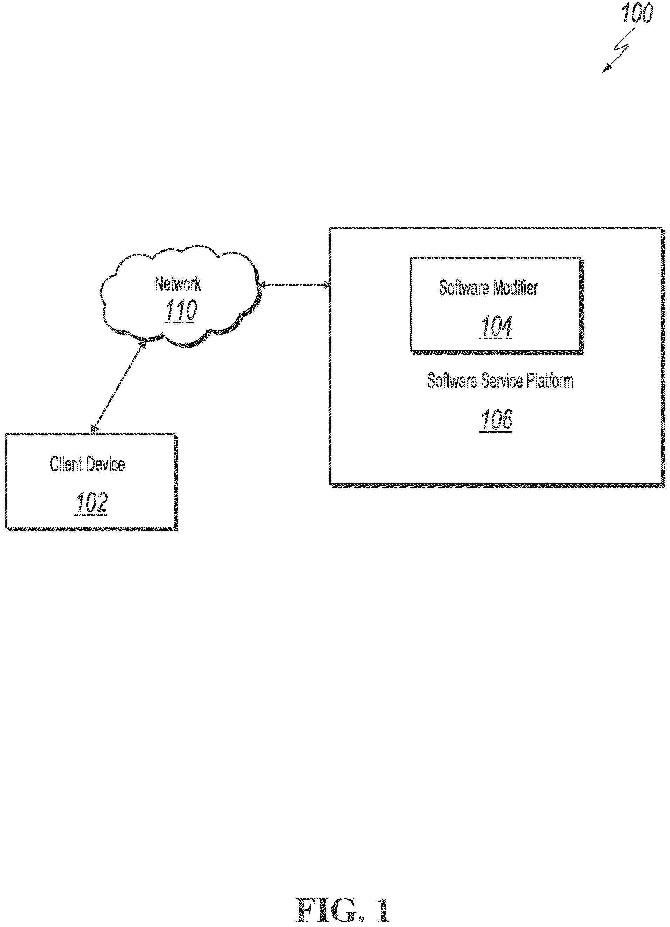

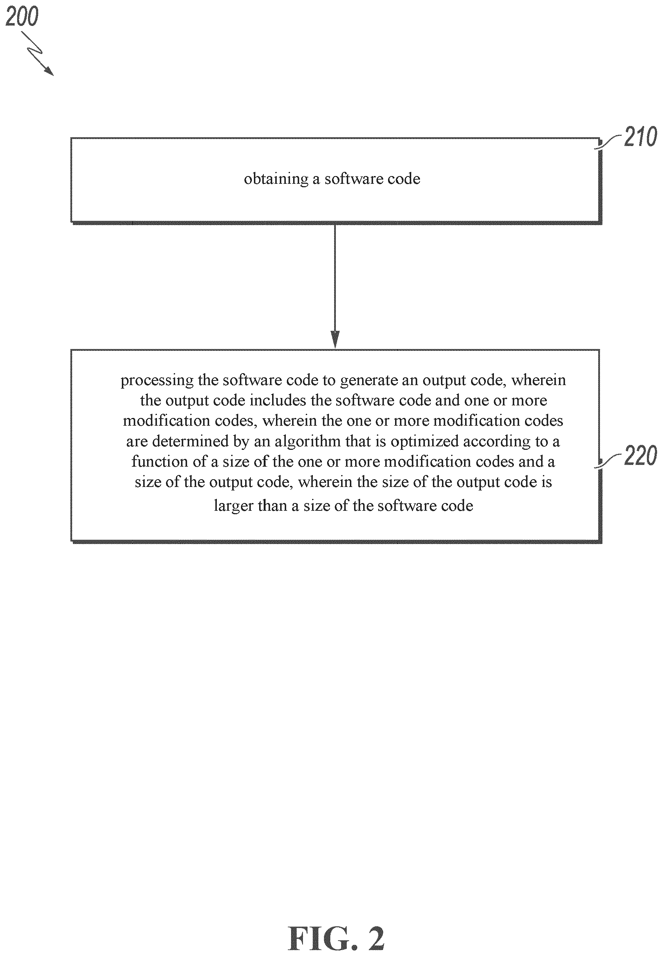

In software development, a software is usually developed as a source code. The source code can be compiled into binary code, also referred to as executable code or executable file. The binary code can be executed by a computer. The binary code is shipped. A malicious actor might want to copy or modify part of the software. To do so, the malicious actor may use the decompiler to process the binary code to obtain an approximate version of the source code. The malicious actor can learn proprietary information from the approximate version of the source code, copy these codes for other uses without permission, or manipulate the code to generate malicious attacks.
To protect the copyrights of the software, and to prevent the malicious actor from generating malicious code, the software can be modified before shipment. In some case, the modification can be performed by adding additional codes. In some cases, the modification can be performed on the source code prior to compilation by adding additional codes. The additional codes can be added without changing the functionality of the original code. The modified code with the additional codes can be compiled to generate new binary code to be shipped. This new binary code, if processed by the decompiler, can generate a large amount of garbage code that makes it difficult for a malicious actor to extract the useful source code from among these garbage codes.
In some implementations, a computer-implemented algorithm can be applied to select the additional codes and modify the software code. The algorithm uses artificial intelligence techniques with an optimization function that calculate the size of modified code and the size of additional codes. This approach provides an automatic process of modifying the software code to protect copyright of the software code and prevent malicious manipulation of software. FIGS. 1-3 and associated descriptions provide additional details of these implementations.
FIG. 1 is a schematic diagram showing an example system 100 that modifies a software code, according to an implementation. At a high level, the example system 100 includes a software service platform 106 that is communicatively coupled with a client device 102 over a network 110.
The client device 102 represents an electronic device that provides the software code to be modified. In some cases, the client device 102 can send the software code to the software service platform 106 for modification. In some cases, the software service platform 106 can send the output of the software modification to the client device 102.
The software service platform 106 represents an application, a set of applications, software, software modules, hardware, or any combination thereof that modifies a software code. The software service platform 106 can be an application server, a service provider, or any other network entity. The software service platform 106 can be implemented using one or more computers, computer servers, or a cloud-computing platform. The software service platform 106 can be used to train machine learning models that are used in the modification process, e.g., the machine learning models discussed in FIG. 2 and associated descriptions. The software service platform 106 includes a software modifier 104. The software modifier 104 represents an application, a set of applications, software, software modules, hardware, or any combination thereof that modifies the software code based on one or more modification codes. In some implementations, the software modifier 104 can select the modification codes by using a selection algorithm that is optimized according to an optimization function of the size of the modified codes and the size of decompiled version of the output codes. FIGS. 2-3 and associated descriptions provide additional details of these implementations.

The software code can be in the format of a source code. In a software development process, source code can be created by programmers using a text editor or a visual programming tool prior to compilation. The source code can be developed with a human-readable programming language and may be saved in a text file. In some cases, the source code can be generated by automated tools, e.g., artificial intelligence powered by large language models. The source code is written in a higher-level programming language, such as C++, JAVA, or PYTHON, which are more abstract and easier to understand. The source code can be compiled to generate binary code.

In some cases, the software code can also be in the format of an assembly code. The assembly code is written in a low-level programming language that is specific to a particular computer architecture. The assembly code includes instructions that are directly executed by the computer's central processing unit (CPU). Assembly code can be more difficult to read and write than the source code. The assembly code can also be compiled to generate binary code.

The binary software code can include a stream of bytes that are generated by compiling the source code. Thus, the binary software code may not be in a human-readable format and may not be easily parsed or analyzed by a human. The binary software code can also be referred to as the binary code or the executable code.

The binary software code can be in a configuration of object code, executable code, or bytecode. An object code is the product of compiler output of a sequence of statements or instructions in a computer language. The source code can be logically divided into multiple source files. Each source file is compiled independently into a corresponding object file that includes an object code. The object codes in the object files are binary machine codes, but they may not be ready to be executed. The object files can include incomplete references to subroutines outside themselves and placeholder addresses. During the linking process, these object files can be linked together to form one executable file that includes executable code that can be executed on a computing device. During the linking process, the linker can read the object files, resolve references between them, perform the final code layout in the memory that determines the addresses for the blocks of code and data, fix up the placeholder addresses with real addresses, and write out the executable file that contains the executable code.

A bytecode, also referred to as portable code or p-code, is a form of instruction set designed for efficient execution by a software interpreter. Bytecodes include compact numeric codes, constants, and references (normally numeric addresses) that encode the result of compiler parsing and perform semantic analysis of things like type, scope, and nesting depths of program objects. The bytecode includes instruction sets that have one-byte opcodes followed by optional parameters. Intermediate representations, such as the bytecode, may be output by programming language implementations to ease interpretation or may be used to reduce hardware and operating system dependence by allowing the same code to run cross-platform, on different devices. The bytecode may often be either directly executed on a virtual machine (a p-code machine i.e., interpreter), or it may be further compiled into machine code for better performance. In some cases, binary software code that is coded using platform-independent languages such as JAVA can be stored in the bytecode format.

As will be discussed in FIG. 2, in some cases, the software code can also be in the format of binary code.

Turning to a general description, the client device 102 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or a combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flowchart showing an example method 200 for modifying a software code, according to an implementation. The example method 200 can be implemented by a software service platform, e.g., the software service platform 106 shown in FIG. 1. The example operation 200 shown in FIG. 2 can be implemented using additional, fewer, or different operations, which can be performed in the order shown or in a different order.

At 210, a software code is obtained. The software code is the input code to be modified. In some cases, the software code can be a source code written in the format according to a high level programming language. Alternatively, the software code can be an assembly code written in the format according to a low level programming language.

At 220, the software code is processed to generate an output code. In some cases, the output code is generated by adding one or more modification codes to the software code. Therefore, the size of the output code is larger than a size of the software code.

The modification codes are determined by an algorithm that is optimized according to a function of the size of the modification codes and the size of the output code. In some implementations, the optimizing function includes two terms. The first term is calculated based on the size of a decompiled code of the output code. The value of this term represents the effect of size increase by the modification codes. The second term is calculated based on the size of the modification codes themselves. Therefore, the goal of the optimizing function is to make the size increase caused by the modification codes as large as possible, while making the size of the modification codes that are added to generate the output codes to be as small as possible.

The following equation represents an example optimizing function:

$$L = - a * size(D*(C*(S+S\_mod))) + b * sum(size(s\_mod\_i)) \qquad (1)$$

where L represents the optimizing function. Size represents a size function. For example, the size function can take an input file and return the size of the input file, in the unit of bytes, kilobyte (KB), megabyte (MB), etc. Sum represents a summation function. $D*$ represents a decompiling operation. $C*$ represents a compiling operation. S represents the software code, S_mod represents all the modification codes. N is the number of modification codes in S_mod. N is an integer, and N>=1. s_mod_i represents each modification code in the one or more modification codes, where i = 1 ... N.

Therefore, S+S_mod represents output code, which includes the software code with the addition of the modification codes. The wording "addition" in this context could cover different meanings. For example, the addition of the modification codes could mean the insertion of some codes into the software code. The insertion of some codes could be done in different parts of the software code without perturbing the results provided by the execution of the output code. In this case, the execution of the output code and the software code may provide the same results. In some example, the modification codes could be dead codes that do not affect the behavior of other instructions comprised in the software code. In other examples, the modification codes are codes that are processed during the execution of the output code without perturbing or altering the results of the software code. $C*(S+S\_mod)$ represents the compiled version of the output code, in the binary code format. $D*(C*(S+S\_mod))$ represents a decompiled version of the binary code according to a decompiler. $size(D*(C*(S+S\_mod)))$ represents size of the decompiled version of the binary code after modification.

sum(size(s_mod_i)) represents the sum of the size for all the modification codes added to the software code to generate the output code.

In some cases, instead of optimizing according to the sum of the size for all the modification codes, the optimizing function can be configured to optimize the compiled version of the output code. The following equation represents an example optimizing function based on this alternative:

$$L = - a * size(D*(C*(S+S\_mod))) + b * size (C*(S+S\_mod)) \qquad (1a)$$

a and b represent scaling factors. a and b can be set to positive real numbers. In some cases, a and b can be set to 1. In this case, the optimizing function represents the difference of the size increase introduced by the modification code and the size of the modification codes without scaling. Alternatively, a or b can be selected to a value different than 1, to increase or decrease the weight of the size increase effect (represented by the first term), the size of the modification codes (represented by the second term), or a combination thereof. These scaling factors can be configured by a user, an administrator, or other operation personnel or algorithms

As explained previously, the modification codes are codes that are added to the software codes without breaking the functionality of the software code. In some cases, a library of the pre-defined modification codes can be used. The modification codes in the library can be self-contained codes, e.g., codes that will not be executed, codes that add comments, codes that perform minor functions such as adding a section, a loop, or changing a variable name and that do not impact the substantial operation of the software code, etc.

Alternatively or in combination, modification code samples can be generated during the execution, e.g., after receiving the software code. In some cases, a machine learning model can be used. The machine learning model can be trained to produce modification modes that do not break the function of the software code. The machine learning model can take the software code as input and generate modification code samples.

In some cases, restrictive criteria can be used to limit the modification code samples, including the pre-defined or the generated modification code samples, that can be selected for a software code. The restrictive criteria can be a size limit for the modification code samples. The size limit can be an absolute number, e.g., a number of bytes, or a relative number, e.g., a percentage size of the software code.

An algorithm is used to select modification codes from the library of the pre-defined modification code samples, the generated modification code samples, or a combination thereof.

In some cases, the algorithm can be a genetic algorithm. In the context of software development, a genetic algorithm is an algorithm that can be used to select mutations of codes. In some cases, the algorithm can be implemented in an iterative process.

In the first iteration, a population of individual codes are generated. The population for the individual codes for each iteration can also be referred to as a corresponding generation. In some cases, each of the individual codes can be generated by adding a modification code sample to the software code. The modification code sample can be selected from the library of pre-defined modification code samples, the generated modification code samples, or a combination thereof. In some cases, for the first iteration, each modification code sample is used to add to the software code to generate a corresponding individual of the first generation. Alternatively, a random function, also referred to as a randomization function or a randomization process, can be used to select a configured number of modification code samples to generate the first generation. In some cases, a random function can be used to select the location of the software code where the selected modification code sample is added to. Examples of the random process include selecting random lines at which to add modifications, or selecting random variable names to change, or selecting random functions to apply modifications to. The fitness value of each individual code is evaluated according to a fitness function. In this case, the fitness function can be the optimization function discussed previously, e.g., the optimization function in equation (1). The optimization function can be applied to each individual code to obtain its fitness values. The top performers with the best fitness value are considered as the fittest that can be used for the next iteration. These top performers represent the individual codes that produce the biggest size increase after compiling and decompiling with the smallest size of added modification code samples. In some cases, the number of top performers can be configured as a number, or as a percentage number of the population. Alternatively, a fitness threshold can be configured. The individual codes whose fitness values met the fitness threshold are selected as top performers.

The top performers form the population of the second generation for the second iteration. In some cases, a crossover technique can be used to generate additional individual codes in each generation. For example, these individual codes in the second generation are randomly selected to pair up and generate child individual codes. These child individual codes include the modification code samples from both parents, which are inserted at the corresponding locations of their parents. Additionally or alternatively, the child individual codes can include a recombination of the parent individual codes, which means that they may randomly include zero, some, or all modification code samples from their parent individual codes. Additionally or alternatively, a mutation technique can be used to generate additional individual codes. For example, mutations can be performed by shifting the locations of the inserted modification samples to a different location selected based on a random function. In some cases, the child individual codes and the mutated individual codes can be added to the population of the second generation. Other techniques, e.g., regrouping, colonization-extinction, or migration can also be used to generate additional individual codes in each generation.

The individual codes in the second generations can be further evaluated according to the optimized function discussed previously to select individual codes of the next generation. The iteration repeats until stopping criteria is met. The stopping criteria can be configured. In some cases, the stopping criteria can be reached when the number of individual codes in a generation reaches 1. Additional or alternatively, the stopping criteria can be a preconfigured number of iterations performed. Additional or alternatively, the stopping criteria can be a preconfigured fitness level that is reached by the population of the final generation.

If more than one individual code remain in the final generation when the stopping criteria is reached, the optimize function is used to evaluate their fitness value, and the individual code with the best fitness value is selected.

In some implementations, a gradient based model can be used to select the modification codes for a software code from the modification code samples. A gradient descent optimization is an optimization algorithm used to train a machine learning model by minimizing a differentiable objective function. The model tweaks its parameters iteratively to minimize a loss function to find the local minimum. In this case, the loss function can be the optimization function discussed previously, e.g., the optimization function in equation (1). The model can be trained to approximate the steps of adding modification codes to the source codes to generate candidate codes, compiling the candidate codes to generate a binary code version of the candidate codes, decompiling the binary code version to generate a decompiled version, and selecting candidate codes including the modification codes for a given software code with the minimum value of the optimization function. Thus, the software code can be fed into the model and one or more modification code samples can be selected by the model.

The challenge for the gradient based model is that it is operable for differentiable operations. However, the compilation and decompilation are likely to be non-differentiable steps. In some cases, the attack algorithms can be applied to the differentiable proxy models instead of the models for the actual decompiler/compiler chain. The proxy models are not used to directly select code modifications but rather as targets for the adversarial attacks. The proxy models are trained to replicate the behavior of the compiler/decompiler chain so that attacks against the proxy models transfer to the real compiler and decompiler chain.

In one example, two proxy models can be used. In one example, a model C is trained to approximate the actions of the compiler C* and a model D is trained to approximate the actions of the decompiler D*. Both model C and model D are machine learning models, e.g., neural networks, trained to take the corresponding inputs and outputs of each procedure and minimize the error. For example, a dataset of training source codes train_S can include multiple training source codes. Each of the training source codes is represented as train_S_i, where i=1...M. M is the number of training source codes in the datasets. The training source codes in the dataset can be compiled by using the compiler C* to create training labels. Each training label is the compiled version of training source code. Each training label is represented as train_label_i, wherein train_label_i = C*(train_S_i). The decompiler D* can be applied to the train_label_i to generate decompiled version D*(train_label_i) for each training label train_label_i. Thus the training pairs [train_label_i, D*(train_label_i)] are created. The training pairs can be used to train the proxy models C and D. The proxy models C and D can be used to generate a gradient for the compilation and decompilation steps in the gradient based model.

Additionally or alternatively, the compilation and decompilation process can be replaced by a model that approximates the decompilation size based on the source code. For example, a machine learning model that is trained on pairs of (train_S_i, size(D*(C*( train_S_i)))). This machine learning model can be trained to produce a size of a decompiled version of a compiled source code. Therefore, this machine learning model can be used to replace the proxy models C and D to generate the decompilation size for the loss function calculation.

].

In some cases, an adversarial attack algorithm can be used to select the modification codes for a software code from the modification code samples. In the context of computer science, an adversarial attack algorithm refers to a machine learning algorithm that is trained to alter an input so that the altered input can be misclassified. For example, a software classifier can be a machine learning model that is trained to take a software code and generate a classification label for the software code. The classification label can be a type of malware, a type of software family, or etc. A software adversarial attack model can be trained to take an input software code and generate an altered software code that will be misclassified by the software classifier. In other words, the classification label generated by the software classifier for the altered code is different than the classification label of the original software code. The altered software code can be generated by adding selected alteration codes that are pre-defined or generated during execution. Examples of the adversarial attack algorithm include fast gradient sign method (FGSM), and Jacboian-based saliency map attack (JSMA).

In some implementations, the adversarial attack algorithm can be used as the algorithm to select the modification codes discussed in this disclosure by turning the classification process into a regression problem. Here, the size of decompiled file after alteration can be defined into different classes, e.g., [0-1 MB], [1-2MB], [2-5MB]. The optimization function discussed previously, e.g., the optimization function in equation (1), can be used to push an adversarial attack algorithm to select altered code that belongs to the classes that are farthest away from the classes of the unaltered code. In this way, the adversarial attack algorithm can generate the altered code based on an input software code by using the pre-defined or generated modification codes as discussed previously. The out altered code can be optimized based on the optimization function.

In some cases, a reinforcement learning algorithm can be used to select the modification codes for a software code from the modification code samples.

In some implementations, the reinforcement learning algorithm can be modeled as a Markov decision process. An agent interacts with the environment in discrete time steps. At each time t, the agent receives the current state $S_t$ and reward $R_t$. It chooses an action $A_t$ from the set of available actions. In this case, the agent can be the software code. The set of available actions can be the set of modification code samples. At each step, the software code randomly selects a modification code sample to complete the action $A_t$. Alternatively, the action $A_t$ can be removing a previously added modification code sample. The optimization function discussed previously, e.g., the optimization function in equation (1), can be used to calculate the reward $R_t$. The operation continues as the code continues to add other modification code samples. The reinforcement learning algorithm is trained to optimize the cumulative reward according to the optimization function discussed previously. Therefore, when the reinforcement learning algorithm terminates, the modification codes can be selected according to the optimization function. In some cases, reinforcement learning approaches such as policy optimization or Q-learning can be applied.

Other artificial learning algorithms can also be used to select modification codes for a software code, by using the optimization function discussed previously.

In some cases, during the operations of these algorithms, after each step where a modified code is generated by adding the modification code samples to the previous codes, a functionality test can be performed, e.g., by executing the modified code and evaluating the output, to ensure that the modified code does not break the functionality of the original code. If the functionality is changed, the modification code can be discarded.

As discussed previously, the software code can be source code or assembly code. Alternatively, the software code can also be in the format of binary code. In this case, the modification code samples can also be in the format of binary code. The optimization function can be adjusted to the following:

$$L = - a * size(D*(C+C\_mod)) + b * sum(size(c\_mod\_i)) \qquad (2)$$

where L represents the optimizing function. Size represents a size function. For example, the size function can take an input file and return the size of the input file, in the unit of byte, kilobyte (KB), megabyte (MB), etc. Sum represents a summation function. $D*$ represents a decompiling operation. C represents the software code in binary code format, C_mod represents the modification codes. N is the number of modification codes in C_mod. N is an integer, and N>=1. c_mod_i represents each modification code in the modification codes, where i = 1 ... N.

As discussed previously, in some cases, instead of optimizing according to the sum of the size for all the modification codes, the optimizing function can be configured to optimize the compiled version of the output code. The following equation represents an example optimizing function based on this alternative:

$$L = - a * size(D*(C+C\_mod)) + b * size (C+C\_mod) \qquad (2a)$$

In some cases, the process discussed previously may be compiler-decompiler specific. For example, the optimization function (1) uses a compiler $C*$ and a decompiler $D*$. Therefore, if a different compiler or decompiler is used, the value outputted by the optimization function (1) will be different. In one case, the algorithms discussed previously can be executed for different compiler-decompiler combinations to produce different sets of selected modification codes. These different sets of selected modification codes can be combined to select the output set of modification codes. In one example, the combination can be performed based on the number of occurrences of the modification codes that appear in multiple selected sets. For example, each selected modification code is assigned a rank. The rank can be determined by the number of occurrences in different selected sets. If 4 compilers and 4 decompilers are used, there are total of 16 different compiler-decompiler combinations. The selection algorithm discussed previously, e.g., the genetic algorithm or another algorithm is performed for each of the compiler-decompiler combination to generate 16 sets of selected modification codes. If a modification code was selected in 3 sets, the rank of the modification code is set to 3. The ranks of all the selected modification codes can be compared and the selected modification codes with the highest rank can be chosen as the modification codes to be added to the software code.

Alternatively or additionally, the rank can be assigned based on the average values of the optimization function for these selected modification codes. As discussed previously, the optimization function of different compiler-decompiler combinations can produce different values. If a modification code is selected in 3 sets, the values of the optimization function for the modification code of the 3 corresponding compiler-decompiler combinations can be calculated and averaged. In some cases, these values can be normalized before averaging. The normalization can be performed by dividing the value by the size of the $D*(C*(S))$ of the corresponding compiler-decompiler combination, where S represents the source code, and $D*$ and $C*$ represent the decompiler and the compiler of the compiler-decompiler combination. The averaged value can be used to select the modification codes among the selected modification codes.

In some cases, the algorithm discussed previously can also be trained jointly for different compiler-decompiler combinations. For example, instead of using one optimization function as the fitness function in the genetic algorithm discussed previously, or the loss function in the gradient based model discussed previously, a joint optimization function can be used. The joint optimization function can include the sum of multiple versions of the optimization function. Each version of the optimization function can be used to calculate the optimization value of one compiler-decompiler combination. In one example, there are 16 different compiler-decompiler combinations, then 16 optimization values can be calculated according to the optimization function using their respective compiler and decompiler. These 16 values can be added to represent the output of the joint optimization function. In this case, the algorithm can be optimized for multiple compiler-decompiler combinations together. In some cases, different weights can be added to the output of each version of optimization function for a corresponding compiler-decompiler combination. These weights may present the importance of a particular compiler-decompiler combination. For example, a compiler-decompiler combination having a compiler or decompiler that is commonly used may be assigned to a large weight and a compiler-decompiler combination having a compiler or decompiler that is less frequently used may be assigned to a smaller weight.

In some cases, the selected modification code or the modified codes including the selected modification code can be outputted at the user interface of the software service platform that performs the analysis. In some cases, other information of the selection process, e.g., the values of the optimization function, the size information of the modification codes, the size of the decompiled version of the modified codes, can also be outputted. Alternatively or additionally, the selected modification code or the modified codes can be sent to a different device for outputting. Other information of the selection process, e.g., the values of the optimization function, the size information of the modification codes, the size of the decompiled version of the modified codes, can also be sent to the different device.

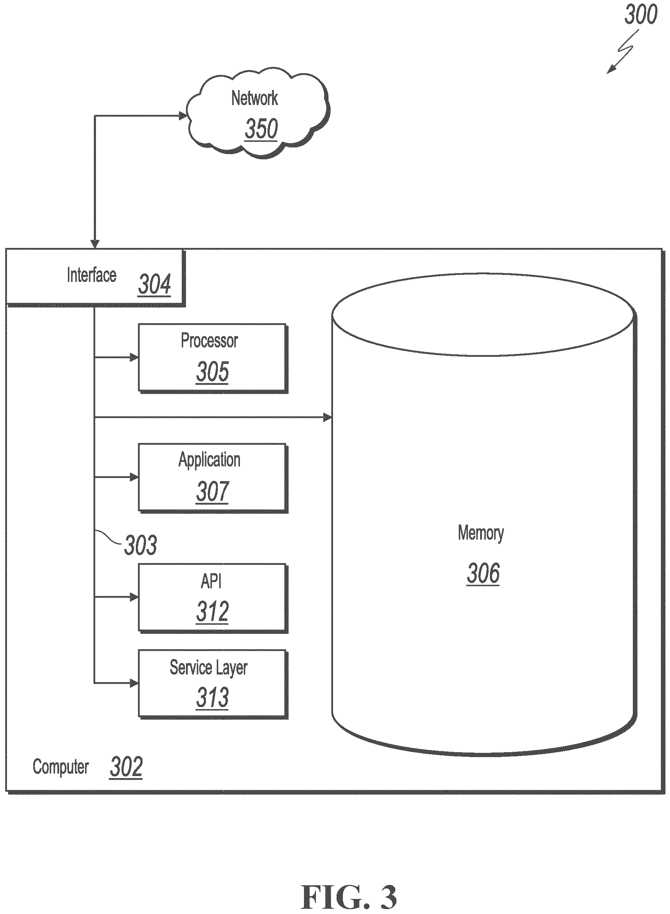

FIG. 3 is a high-level architecture block diagram showing a computer 302 coupled with a network 350, according to an implementation. The computer 302 can also be used to implement the operations discussed in FIGS. 1-2. The described illustration is only one possible implementation of the described subject matter and is not intended to limit the disclosure to the single described implementation. Those of ordinary skill in the art will appreciate the fact that the described components can be connected, combined, or used in alternative ways, consistent with this disclosure.

The network 350 facilitates communications between the computer 302 and other devices. In some cases, a user, e.g., an administrator, can access the computer 302 from a remote network. In these or other cases, the network 350 can be a wireless or a wireline network. In some cases, a user can access the computer 302 locally. In these or other cases, the network 350 can also be a memory pipe, a hardware connection, or any internal or external communication paths between the components.

The computer 302 includes a computing system configured to perform the algorithm described in this disclosure. For example, the computer 302 can be used to implement the software service platform 106 or the client device 102 shown in FIG. 1. In some cases, the algorithm can be implemented in an executable computing code, e.g., C/C++ executable code. Alternatively, or in combination, the algorithm can be implemented in an application program, e.g., EXCEL. In some cases, the computer 302 can include a standalone LINUX system that runs batch applications. In some cases, the computer 302 can include mobile or personal computers that run the application program.

The computer 302 may include an input device, such as a keypad, keyboard, touch screen, microphone, speech recognition device, or another device that can accept user information, and/or an output device that conveys information associated with the operation of the computer 302, including digital data, visual and/or audio information, or a GUI.

The computer 302 can serve as a client, network component, a server, a database or other persistency, or the like. In some implementations, one or more components of the computer 302 may be configured to operate within a cloud-computing-based environment.

At a high level, the computer 302 is an electronic computing device operable to receive, transmit, process, store, or manage data and information. According to some implementations, the computer 302 may also include or be communicably coupled with an application server, e-mail server, web server, caching server, streaming data server, business intelligence (BI) server, and/or other server.

The computer 302 can receive requests over network 350 from a client application (e.g., executing on a user device) and respond to the received requests by processing said requests in an appropriate software application. In addition, requests may also be sent to the computer 302 from internal users (e.g., from a command console or by another appropriate access method), external or third parties, other automated applications, as well as any other appropriate entities, individuals, systems, or computers.

Each of the components of the computer 302 can communicate using a system bus 303. In some implementations, any and/or all the components of the computer 302, both hardware and/or software, may interface with each other and/or the interface 304 over the system bus 303, using an application programming interface (API) 312 and/or a service layer 313. The API 312 may include specifications for routines, data structures, and object classes. The API 312 may be either computer language-independent or -dependent and refer to a complete interface, a single function, or even a set of APIs. The service layer 313 provides software services to the computer 302. The functionality of the computer 302 may be accessible for all service consumers using this service layer. Software services, such as those provided by the service layer 313, provide reusable, defined business functionalities through a defined interface. For example, the interface may be software written in JAVA, C++, or other suitable language providing data in Extensible Markup Language (XML) format or another suitable format. While illustrated as an integrated component of the computer 302, alternative implementations may illustrate the API 312 and/or the service layer 313 as stand-alone components in relation to other components of the computer 302. Moreover, any or all parts of the API 312 and/or the service layer 313 may be implemented as child or sub-modules of another software module or hardware module, without departing from the scope of this disclosure.

The computer 302 includes an interface 304. Although illustrated as a single interface 304 in FIG. 3, two or more interfaces 304 may be used according to particular needs, configurations, or particular implementations of the computer 302. The interface 304 is used by the computer 302 for communicating with other systems in a distributed environment connected to the network 350 - (whether illustrated or not). Generally, the interface 304 comprises logic encoded in software and/or hardware in a suitable combination and operable to communicate with the network 350. More specifically, the interface 304 may comprise software supporting one or more communication protocols associated with communications such that the network 350 or the interface's hardware are operable to communicate physical signals.

The computer 302 includes a processor 305. Although illustrated as a single processor 305 in FIG. 3, two or more processors may be used according to particular needs, configurations, or particular implementations of the computer 302. Generally, the processor 305 executes instructions and manipulates data to perform the operations of the computer 302. In some cases, the processor 305 can include a data processing apparatus.

The computer 302 also includes a memory 306 that holds data for the computer 302. Although illustrated as a single memory 306 in FIG. 3, two or more memories may be used according to particular needs, configurations, or particular implementations of the computer 302. While memory 306 is illustrated as an integral component of the computer 302, in alternative implementations, memory 306 can be external to the computer 302.

The application 307 comprises an algorithmic software engine providing functionality according to particular needs, configurations, or particular implementations of the computer 302. Although illustrated as a single application 307, the application 307 may be implemented as multiple applications 307 on the computer 302. In addition, although illustrated as integral to the computer 302, in alternative implementations, the application 307 can be external to the computer 302.

There may be any number of computers 302 associated with, or external to, the system 300 and communicating over network 350. Further, the terms "client," "user," and other appropriate terminology may be used interchangeably, as appropriate, without departing from the scope of this disclosure. Moreover, this disclosure contemplates that many users may use one computer 302, or that one user may use multiple computers 302.

Described implementations of the subject matter can include one or more features, alone or in combination.

For example, in a first implementation, a method, comprising: obtaining a software code; and processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

The foregoing and other described implementations can each, optionally, include one or more of the following features:

A first feature, combinable with any of the following features, wherein the software code is a source code.

A second feature, combinable with any of the previous or following features, wherein wherein the function is expressed as the following: $L = - a * \mathrm{size}(D^*(C^*(S+S\_mod))) + b * \mathrm{size}\ (C^*(S+S\_mod))$, where L represents the function, size represents a size function, sum represents a sum function, $D^*$ represents a decompiling operation, $C^*$ represents a compiling operation, S represents the software code, S_mod represents the one or more modification codes, wherein a and b represent scaling factors.

A third feature, combinable with any of the previous or following features, wherein the algorithm comprises a genetic algorithm.

A fourth feature, combinable with any of the previous or following features, wherein the algorithm comprises on a reinforcement learning algorithm.

A fifth feature, combinable with any of the previous or following features, wherein the algorithm comprises a gradient based model.

A sixth feature, combinable with any of the previous features, wherein the algorithm comprises an adversarial attack algorithm.

In a second implementation, a computer-readable medium containing instructions which, when executed, cause an electronic device to perform operations comprising: obtaining a software code; and processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

The foregoing and other described implementations can each, optionally, include one or more of the following features:

A first feature, combinable with any of the following features, wherein the software code is a source code.

A second feature, combinable with any of the previous or following features, wherein wherein the function is expressed as the following: $L = - a * \mathrm{size}(D^*(C^*(S+S\_mod))) + b * \mathrm{size}\ (C^*(S+S\_mod))$, where L represents the function, size represents a size function, sum represents a sum function, $D^*$ represents a decompiling operation, $C^*$ represents a compiling operation, S represents the software code, S_mod represents the one or more modification codes, wherein a and b represent scaling factors.

A third feature, combinable with any of the previous or following features, wherein the algorithm comprises a genetic algorithm.

A fourth feature, combinable with any of the previous or following features, wherein the algorithm comprises on a reinforcement learning algorithm.

A fifth feature, combinable with any of the previous or following features, wherein the algorithm comprises a gradient based model.

A sixth feature, combinable with any of the previous features, wherein the algorithm comprises an adversarial attack algorithm.

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations comprising: obtaining a software code; and processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

The foregoing and other described implementations can each, optionally, include one or more of the following features:

A first feature, combinable with any of the following features, wherein the software code is a source code.

A second feature, combinable with any of the previous or following features, wherein wherein the function is expressed as the following: L = - a * size(D*(C*(S+S_mod))) + b * size (C*(S+S_mod)), where L represents the function, size represents a size function, sum represents a sum function, D* represents a decompiling operation, C* represents a compiling operation, S represents the software code, S_mod represents the one or more modification codes, wherein a and b represent scaling factors.

A third feature, combinable with any of the previous or following features, wherein the algorithm comprises a genetic algorithm.

A fourth feature, combinable with any of the previous or following features, wherein the algorithm comprises on a reinforcement learning algorithm.

A fifth feature, combinable with any of the previous or following features, wherein the algorithm comprises a gradient based model.

A sixth feature, combinable with any of the previous features, wherein the algorithm comprises an adversarial attack algorithm.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer readable media for storing computer program instructions and data can include all forms of permanent/non-permanent or volatile/non volatile memory, media and memory devices, including by way of example semiconductor memory devices, for example, random access memory (RAM), read only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto optical disks; and optical memory devices, for example, digital versatile/video disc (DVD), compact disc (CD) ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back end, middleware, or front end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

The present disclosure also comprises the following enumerated example embodiments (EEEs), which are not claims.

EEE 1. A method, comprising:

obtaining a software code; and
processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

EEE 2. The method of EEE 1, wherein the software code is a source code.
EEE 3. The method of EEE 2, wherein the function is expressed as the following:
$L = - a * \text{size}(D^*(C^*(S+S\_mod))) + b * \text{size}(C^*(S+S\_mod))$, where L represents the function, size represents a size function, sum represents a sum function, $D^*$ represents a decompiling operation, $C^*$ represents a compiling operation, S represents the software code, S_mod represents the one or more modification codes, wherein a and b represent scaling factors. EEE 4. The method of EEE 1, wherein the algorithm comprises a genetic algorithm.
EEE 5. The method of EEE 1, wherein the algorithm comprises on a reinforcement learning algorithm.
EEE 6. The method of EEE 1, wherein the algorithm comprises a gradient based model.
EEE 7. The method of EEE 1, wherein the algorithm comprises an adversarial attack algorithm.
EEE 8. A computer-readable medium containing instructions which, when executed, cause an electronic device to perform operations comprising:

obtaining a software code; and
processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

EEE 9. The computer-readable medium of EEE 8, wherein the software code is a source code.
EEE 10. The computer-readable medium of EEE 9, wherein the function is expressed as the following:
$L = - a * \text{size}(D^*(C^*(S+S\_mod))) + b * \text{size}(C^*(S+S\_mod))$, where L represents the function, size represents a size function, sum represents a sum function, $D^*$ represents a decompiling operation, $C^*$ represents a compiling operation, S represents the software code, S _mod represents the one or more modification codes, wherein a and b represent scaling factors.
EEE 11. The computer-readable medium of EEE 8, wherein the algorithm comprises a genetic algorithm.
EEE 12. The computer-readable medium of EEE 8, wherein the algorithm comprises on a reinforcement learning algorithm.
EEE 13. The computer-readable medium of EEE 8, wherein the algorithm comprises a gradient based model.
EEE 14. The computer-readable medium of EEE 8, wherein the algorithm comprises an adversarial attack algorithm.
EEE 15. A computer-implemented system, comprising:

one or more computers; and
one or more computer memory devices interoperably coupled with the one or more computers and
having tangible, non-transitory, machine-readable media storing one or more instructions that,
when executed by the one or more computers, perform one or more operations comprising:

obtaining a software code; and

processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

EEE 16. The computer-implemented system of EEE 15, wherein the software code is a source code.
EEE 17. The computer-implemented system of EEE 16, wherein the function is expressed as the following:
L = - a * size(D*(C*(S+S_mod))) + b * size (C*(S+S_mod)), where L represents the function, size represents a size function, sum represents a sum function, D* represents a decompiling operation, C* represents a compiling operation, S represents the software code, S _mod represents the one or more modification codes, wherein a and b represent scaling factors.
EEE 18. The computer-implemented system of EEE 15, wherein the algorithm comprises a genetic algorithm.
EEE 19. The computer-implemented system of EEE 15, wherein the algorithm comprises on a reinforcement learning algorithm.
EEE 20. The computer-implemented system of EEE 15, wherein the algorithm comprises a gradient based model.

## Claims

1. A method, comprising:

   obtaining a software code; and
   processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code.

2. The method of claim 1, wherein the software code is a source code.

3. The method of claim 2, wherein the function is expressed as the following:
L = - a * size(D*(C*(S+S_mod))) + b * size (C*(S+S_mod)), where L represents the function, size represents a size function, sum represents a sum function, D* represents a decompiling operation, C* represents a compiling operation, S represents the software code, S _mod represents the one or more modification codes, wherein a and b represent scaling factors.

4. The method of any previous claim, wherein the algorithm comprises a genetic algorithm.

5. The method of any one of claims 1 to 3, wherein the algorithm comprises on a reinforcement learning algorithm.

6. The method of any one of claims 1 to 3, wherein the algorithm comprises a gradient based model.

7. The method of any one of claims 1 to 3, wherein the algorithm comprises an adversarial attack algorithm.

8. A computer-readable medium containing instructions which, when executed, cause an electronic device to perform operations as recited in any of claims 1 to 7.

9. A computer-implemented system, comprising:

   one or more computers; and
   one or more computer memory devices interoperably coupled with the one or more computers and having tangible, non-transitory, machine-readable media storing one or more instructions that, when executed by the one or more computers, perform one or more operations as recited in any of claims 1 to 7.

*100*

Network

*110*

Software Modifier

*104*

Software Service Platform

*106*

Client Device

*102*

**FIG. 1**

*200*

*210*

obtaining a software code

processing the software code to generate an output code, wherein the output code includes the software code and one or more modification codes, wherein the one or more modification codes are determined by an algorithm that is optimized according to a function of a size of the one or more modification codes and a size of the output code, wherein the size of the output code is larger than a size of the software code

*220*

**FIG. 2**

*300*

Network

*350*

Interface  *304*

Processor

*305*

Application

*307*

*303*

API

*312*

Service Layer

*313*

Computer  *302*

Memory

*306*

# FIG. 3

**EP 4 621 556 A1**

Europäisches
Patentamt
European
Patent Office
Office européen
des brevets

# EUROPEAN SEARCH REPORT

**Application Number**

EP 25 16 4539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 668 325 B1 (COLLBERG CHRISTIAN SVEN [NZ] ET AL) 23 December 2003 (2003-12-23) <br> * claim 1 * <br> * column 1, line 66 - column 3, line 16 * <br> * column 12, line 22 - column 26, line 40 * <br> ----- | 1-9 | INV. <br> G06F8/41 <br> G06F8/72 <br> G06F21/14 <br> G06N3/126 |
| X | BERTHOLON BENOIT ET AL: "ShadObf: A C-Source Obfuscator Based on Multi-objective Optimisation Algorithms", 2013 IEEE INTERNATIONAL SYMPOSIUM ON PARALLEL & DISTRIBUTED PROCESSING, WORKSHOPS AND PHD FORUM, IEEE, 20 May 2013 (2013-05-20), pages 435-444, XP032517483, DOI: 10.1109/IPDPSW.2013.234 [retrieved on 2013-10-30] * the whole document * <br> ----- | 1-9 | |

**TECHNICAL FIELDS SEARCHED (IPC)**

G06F
G06N

The present search report has been drawn up for all claims

| Place of search | Date of completion of the search | Examiner |
|---|---|---|
| Munich | 1 July 2025 | Kusnierczak, Pawel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 4539

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | | Publication date | Patent family member(s) | | Publication date |
|---|---|---|---|---|---|
| US 6668325 | B1 | 23-12-2003 | AU | 7957998 A | 25-01-1999 |
| | | | CA | 2293650 A1 | 14-01-1999 |
| | | | CN | 1260055 A | 12-07-2000 |
| | | | EP | 0988591 A1 | 29-03-2000 |
| | | | JP | 4739465 B2 | 03-08-2011 |
| | | | JP | 2002514333 A | 14-05-2002 |
| | | | US | 6668325 B1 | 23-12-2003 |
| | | | WO | 9901815 A1 | 14-01-1999 |

EPO FORM P0459

For more details about this annex : see Official Journal of the European Patent Office, No. 12/82